# EUROPEAN PATENT APPLICATION

(11) **EP 3 664 442 A1**
(43) Date of publication of application: **10.06.2020**
(21) Application number: 17924888.5
(22) Date of filing: 12.09.2017
(51) Int. Cl.: H04N 7/14

(54) **METHOD AND DEVICE FOR IMAGE TRANSMISSION, MOVABLE PLATFORM, MONITORING DEVICE, AND SYSTEM**

(71) Applicant: SZ DJI Technology Co., Ltd., Shenzhen, Guangdong 518057 (CN)
(72) Inventor: LIU, Huaiyu, Shenzhen, Guangdong 518057 (CN); WU, Yifan, Shenzhen, Guangdong 518057 (CN)
(74) Representative: Goddar, Heinz J.
(86) International application number: PCT/CN2017/101440
(87) International publication number: WO 2019/051649

(57) **Abstract**

The embodiments of the present disclosure provide an image transmission method, a device, a movable platform, a monitoring device, and a system. The method includes acquiring a first image captured by a first photographing device mounted on a movable platform, and a second image captured by a second photographing device (S101); performing image processing on the first image and the second image to obtain image-processed image data (S 102); and sending the image-processed image data to a monitoring device. According to various embodiments of the present disclosure, two images captured at the same time respectively by two photographing devices mounted on a movable platform are acquired, image data is obtained after performing image processing on the two images, the image data is sent to a monitoring device, and the monitoring device restores the two images based on the image data and displays one image through each of the two display devices, such that lack of parallax information or depth information in the picture on the monitor screen may be avoided, the farness of objects in the picture on the monitor screen may be accurately determined, and the accuracy of remote monitoring may be improved.

## Description

### TECHNICAL FIELD

The present disclosure generally relates to the field of unmanned aerial vehicles and, more particularly, relates to a method and a device for image transmission, movable platform, and monitoring device and system.

### BACKGROUND

In existing technology, a movable platform, such as an unmanned aerial vehicle, a model airplane, a remote-control vehicle, a remote-control boat, a movable robot, etc. can be equipped with a photographing device. Further, the movable platform transmits an image or video captured by the photographing device to a remote monitoring device through a communication system.

However, in the existing technology, the movable platform sends a two-dimensional image or video to the remote monitoring device, so that the remote monitoring device displays a two-dimensional image. That is, the picture seen by a user that holds the monitoring device is a two-dimensional image.

Due to the lack of parallax information or depth information in the two-dimensional image, the user cannot accurately determine how far the objects are in the monitor screen, thereby preventing the user from accurately monitoring the movable platform through the monitoring device.

### SUMMARY

Embodiments of the present disclosure provide an image transmission method, a device, a movable platform, and a monitoring device and system, so as to improve the accuracy of remote monitoring of a movable platform.

A first aspect of the embodiments of the present disclosure provides an image transmission method, including:
acquiring a first image captured by a first photographing device, and a second image captured by a second photographing device mounted on a movable platform, where the first image and the second image are captured at the same time;
performing image processing on the first image and the second image to obtain image-processed image data; and
sending the image-processed image data to a monitoring device, so that the monitoring device determines the first image and the second image based on the image data, and displays the first image through a first display device and displays the second image through a second display device.

A second aspect of the embodiments of the present disclosure provides an image transmission method, including:
receiving image data sent by a movable platform, where the image data is obtained after the movable platform performs image processing on a first image captured by a first photographing device and a second image captured by a second photographing device, where the first photographing device and the second photographing device are mounted on the movable platform, and the first image and the second image are captured at the same time;
determining the first image and the second image based on the image data; and
displaying the first image through a first display device, and displaying the second image through a second display device.

A third aspect of the embodiments of the present disclosure provides an image transmission device, including a first communication interface, and a first processor, where:
the first processor is configured to:
   acquire a first image captured by a first photographing device, and a second image captured by a second photographing device mounted on a movable platform, where the first image and the second image are captured at the same time; and
   perform image processing on the first image and the second image to obtain image-processed image data; and
the first communication interface is configured to:
   send the image-processed image data to a monitoring device, so that the monitoring device determines the first image and the second image based on the image data, and displays the first image through a first display device and displays the second image through a second display device.

A fourth aspect of the embodiments of the present disclosure provides a movable platform, including:
a fuselage;
a propulsion system, installed on the fuselage, and configured to provide power;
a controller, communicatively connected to the propulsion system, and configured to control movement of the movable platform; and
an image transmission device provided by the third aspect.

A fifth aspect of the embodiments of the present disclosure provides a monitoring device, including a second communication interface, a second processor, a first display device, and a second display device, where:
the second communication interface is configured to:
receive image data sent by a movable platform, where the image data is obtained after the movable platform performs image processing on a first image captured by a first photographing device and a second image captured by a second photographing device, where the first photographing device and the second photographing device are mounted on the movable platform, and the first image and the second image are captured at the same time; and
the second processor is configured to:
   determine the first image and the second image based on the image data; and
   display the first image through the first display device, and display the second image through the second display device.

A sixth aspect of the embodiments of the present disclosure provides a monitoring device, including a movable platform provided by the fourth aspect; and a monitoring device provided by the fifth aspect.

An image transmission method, a device, a movable platform, and a monitoring device and system provided by the embodiments of the present disclosure are able to acquire two images captured by two photographing devices mounted on the movable platform at the same time, and perform image processing on the two images to obtain image data. The image data is sent to the monitoring device, and the monitoring device restores the two images based on the image data and displays an image by each of the two display devices, such that the picture on a monitor screen observed by the user through the two display devices is more in line with the visual characteristics of the human eye, and thus lack of parallax information or depth information in the picture on the monitor screen can be avoided. The user may be able to accurately determine the farness and/or nearness of the objects in the picture on the monitor screen, and thus the accuracy of remote monitoring of the movable platform may be improved.

### BRIEF DESCRIPTION OF THE DRAWINGS

In order to more clearly illustrate the technical solutions in the embodiments of the present disclosure, the drawings that need to be used in the description of the embodiments will be briefly described below. It is obvious that the drawings in the following description are some embodiments of the present disclosure, and for those of ordinary skill in the art, other drawings may also be obtained according to these drawings without any creative effort.
FIG. 1 illustrates a schematic flowchart of an image transmission method according to an embodiment of the present disclosure;
FIG. 2 illustrates a schematic diagram of an image transmission system according to an embodiment of the present disclosure;
FIG. 3 illustrates a schematic diagram of image processing according to an embodiment of the present disclosure;
FIG. 4 illustrates a schematic diagram of image synthesis according to an embodiment of the present disclosure;
FIG. 5 illustrates a schematic diagram of image synthesis according to an embodiment of the present disclosure;
FIG. 6 illustrates a schematic diagram of image synthesis according to an embodiment of the present disclosure;
FIG. 7 illustrates a schematic diagram of image synthesis according to an embodiment of the present disclosure;
FIG. 8 illustrates a schematic diagram of an image transmission system according to another embodiment of the present disclosure;
FIG. 9 illustrates a schematic diagram of an image transmission system according to another embodiment of the present disclosure;
FIG. 10 illustrates a schematic flowchart of an image transmission method according to another embodiment of the present disclosure;
FIG. 11 illustrates a schematic diagram of image processing according to another embodiment of the present disclosure;
FIG. 12 illustrates a schematic flowchart of an image transmission method according to another embodiment of the present disclosure;
FIG. 13 illustrates a schematic flowchart of an image transmission method according to another embodiment of the present disclosure;
FIG. 14 illustrates a schematic flowchart of an image transmission method according to another embodiment of the present disclosure;
FIG. 15 illustrates a structural diagram of an image transmission device according to an embodiment of the present disclosure;
FIG. 16 illustrates a structural diagram of an unmanned aerial vehicle according to an embodiment of the present disclosure;
FIG. 17 illustrates a structural diagram of a monitoring device according to an embodiment of the present disclosure; and
FIG. 18 illustrates a structural diagram of a monitoring device according to another embodiment of the present disclosure.

**Reference symbols:**

| | | |
|---|---|---|
| 20 - unmanned aerial vehicle | 21 - first photographing device | 22 - second photographing device |
| 23 - processor | 24 - communication system | 25 - monitoring device |
| 26 - processor | 27 - first display device | 28 - second display device |
| 114 - antenna | 31 - first image | 32 - second image |
| 33 - target image | 34 - image data | 110 - first bit-stream data |
| 111 - second bit-stream data | 150 - image transmission device | |
| 151 - first communication interface | 152 - first processor | 100 - unmanned aerial vehicle |
| 106 - propeller | | |
| 107 - motor | 117 - electronic speed control | 118 - flight controller |
| 170 - monitoring device | 171 - second communication interface | 172 - second processor |
| 173 - first display device | 174 - second display device | 175 - buffer |

### DETAILED DESCRIPTION OF THE EMBODIMENTS

In the following, the technical solutions in the embodiments of the present disclosure will be clearly described with reference to the accompanying drawings in the embodiments of the present disclosure. It is obvious that the described embodiments are only a part of the embodiments of the present invention, but not all of the embodiments. All other embodiments obtained by those skilled in the art based on the embodiments of the present disclosure without creative efforts are within the scope of the present disclosure.

It should be noted that when a component is referred to as being "fixed" to another component, it can be directly on the other component or an intermediate component may be present. When a component is considered as "connected to" another component, it can be directly connected to another component or both may be connected to an intermediate component.

All technical and scientific terms used herein have the same meaning as commonly understood by one of ordinary skill in the art to which this disclosure belongs, unless otherwise defined. The terminology used in the description of the present disclosure is for the purpose of describing particular embodiments and is not intended to limit the disclosure. The term "and/or" used herein includes any and all combinations of one or more of the associated listed items.

Some embodiments of the present disclosure are described in detail below with reference to the accompanying drawings. The features of the embodiments and examples described below can be combined with each other without conflict.

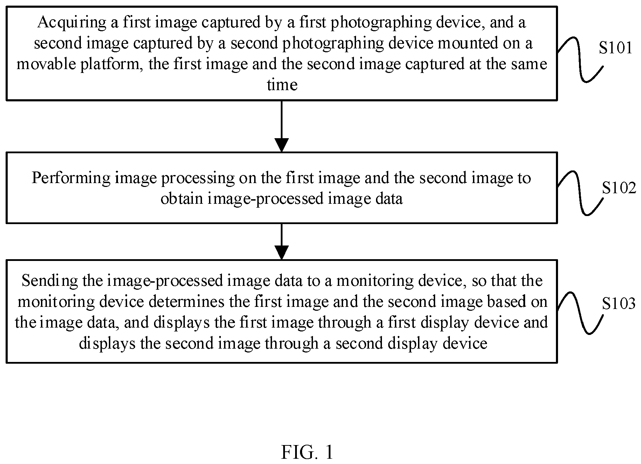

The embodiments of the present disclosure provide an image transmission method. FIG. 1 illustrates a flowchart of an image transmission method according to an embodiment of the present disclosure. As shown in FIG. 1, the method in one embodiment may include:

In S101, acquiring a first image captured by a first photographing device mounted on a movable platform, and a second image captured by a second photographing device mounted on the movable platform. The first image and the second image are captured at the same time.

The image transmission method described in one embodiment is applicable to a movable platform and a corresponding monitoring device thereof, and the movable platform includes at least one of the following: an unmanned aerial vehicle (UAV), a movable robot, a model airplane, a remote-control vehicle, or a remote-control boat.

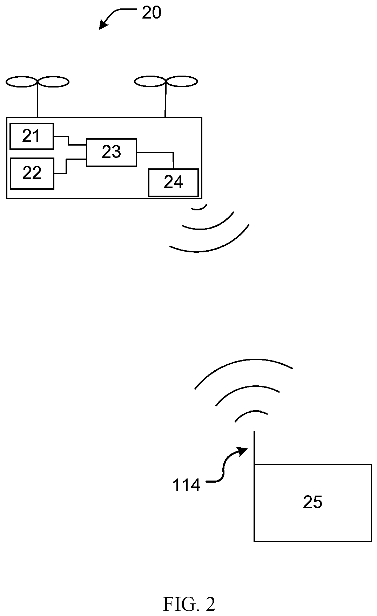

In one embodiment, a UAV is taken as an example to illustrate the image transmission process between the UAV and a ground monitoring device. As shown in FIG. 2, a UAV 20 is equipped with a first photographing device 21 and a second photographing device 22. The first photographing device 21 may be, for example, a camera, and the second photographing device 22 may be, for example, another camera. A processor 23 is communicatively connected to the first photographing device 21 and the second photographing device 22, and the processor 23 may be able to control the first photographing device 21 and the second photographing device 22 to take image information at the same time.

The method of this embodiment may be executed by a processor in a movable platform. The processor may be other general purpose or dedicated processors, and the processor may have image processing functions.

For example, the processor 23 may be able to acquire the image information captured by the first photographing device 21 and the second photographing device 22 at the same time. In the embodiment, the image information captured by the first photographing device 21 may be denoted as a first image, and the image information captured by the second photographing device 22 may be denoted as a second image.

In other embodiments, the processor 23 may further be able to control the photographing parameters of the first photographing device 21 and the second photographing device 22, such that the photographing parameters for the first image captured by the first photographing device 21 and the second image captured by the second photographing device 22 are the same. The photographing parameters may include at least one of the following: an exposure time, a shutter speed, or an aperture size.

In S102, performing image processing on the first image and the second image to obtain image-processed image data.

After acquiring the first image captured by the first photographing device 21 and the second image captured by the second photographing device 22 at the same time, the processor 23 may perform image processing on the first image and the second image to obtain image-processed image data.

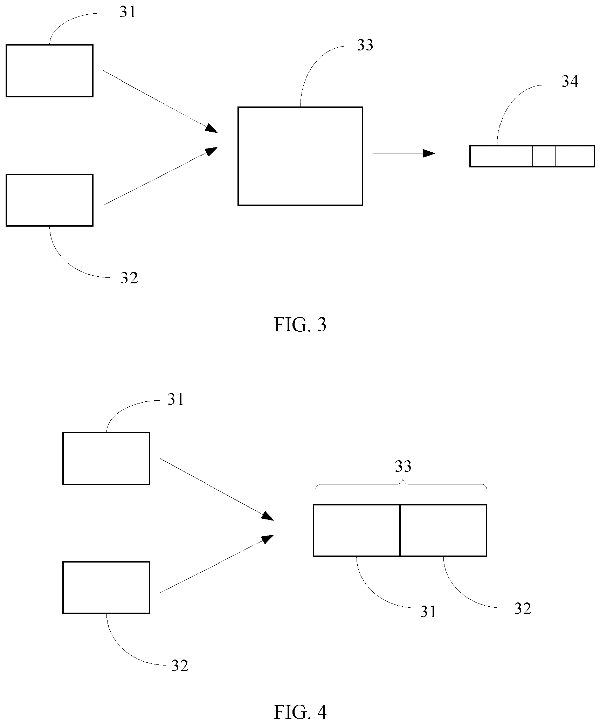

For example, an implementation method for performing image processing on the first image and the second image to obtain image-processed image data includes: combining the first image and the second image into a target image; and encoding the target image to obtain encoded image data. As shown in FIG. 3, 31 denotes the first image captured by the first photographing device 21, 32 denotes the second image captured by the second photographing device 22, and the processor 23 may first combine the first image 31 and the second image 32 into a target image 33. Further, the target image 33 may be encoded to obtain encoded image data 34.

For example, combining the first image and the second image into the target image may include the following possible implementation methods.

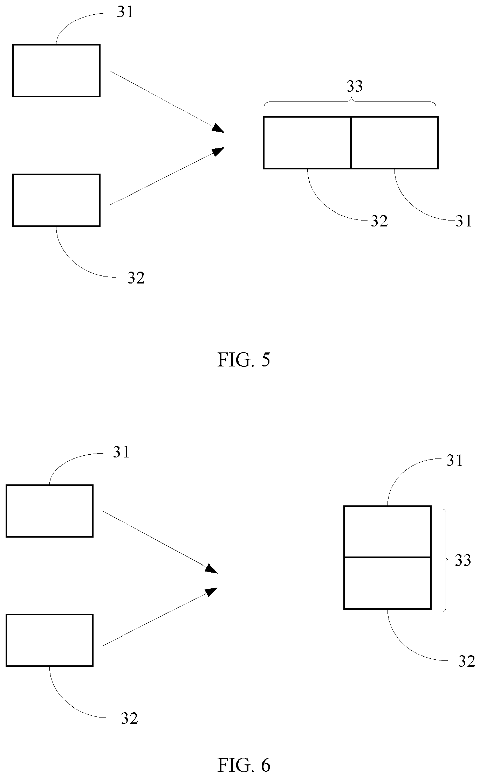

A possible implementation method includes: splicing the first image and the second image left and right to obtain the target image. As shown in FIG. 4, the first image 31 may be spliced to the left side of the second image 32 to obtain the spliced target image 33. Alternatively, as shown in FIG. 5, the first image 31 may be spliced to the right side of the second image 32 to obtain the spliced target image 33.

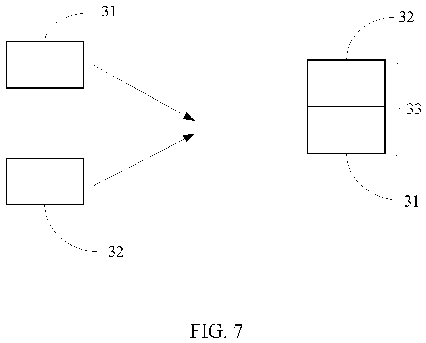

Another possible implementation method includes: splicing the first image and the second image up and down to obtain the target image. As shown in FIG. 6, the first image 31 may be spliced on the upper side of the second image 32 to obtain the spliced target image 33. Alternatively, as shown in FIG. 7, the first image 31 may be spliced on the lower side of the second image 32 to obtain the spliced target image 33.

The splicing methods shown in FIG. 4 to FIG. 7 are only illustrative and not specifically limited. In other embodiments, other image synthesis methods may be included.

In S103, sending the image-processed image data to a monitoring device, so that the monitoring device determines the first image and the second image based on the image data, and displays the first image through a first display device and displays the second image through a second display device.

As shown in FIG. 2 or FIG. 3, the processor 23 may transmit the image data 34 processed from the first image 31 and the second image 32 to a ground monitoring device 25 through a communication system 24 of the UAV 20. The monitoring device 25 may receive the image data sent by the UAV 20 through an antenna 114. The monitoring device 25 may include at least one of the following: a remote controller, a user terminal device, or headwear glasses. Alternatively, the monitoring device 25 can also be a wearable device.

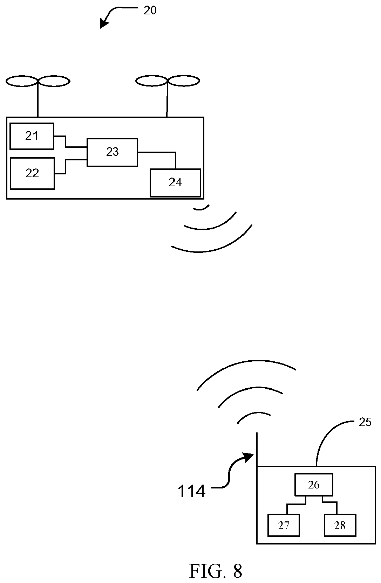

As shown in FIG. 8, after the monitoring device 25 receives the encoded image data 34, the processor 26 of the monitoring device 25 may first decode the encoded image data 34 to obtain the target image 33, further decompose the target image 33 to obtain the first image 31 and the second image 32, and may display the first image 31 through a first display device 27 and display the second image 32 through a second display device 28, or display the second image 32 through the first display device 27 and display the first image 31 through the second display device 28. The first display device 27 may be, for example, a display screen, and the second display device 28 may be, for example, another display screen.

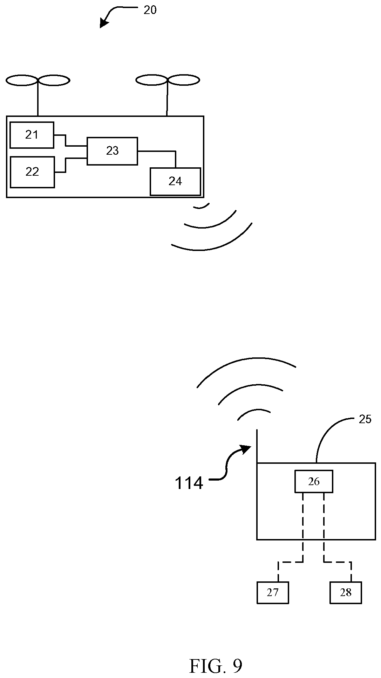

In one embodiment, the first display device 27 and the second display device 28 may be disposed on the monitoring device 25. Alternatively, the first display device 27 and the second display device 28 may be external devices of the monitoring device 25, and the first display device 27 and the second display device 28 may be communicatively connected to the monitoring device 25, respectively, as shown in FIG. 9.

According to various embodiments, two images captured at the same time respectively by two photographing devices mounted on a movable platform are acquired, image processing is performed on the two images to obtain image data, the image data is sent to a monitoring device, and the monitoring device restores the two images based on the image data and displays one image through each of two display devices, such that the picture on a monitor screen observed by the user through the two display devices is more in line with the visual characteristics of the human eye, and thus lack of parallax information or depth information in the picture on the monitor screen can be avoided. The user may be able to accurately determine the farness and/or nearness of objects in the picture on the monitor screen, and thus the accuracy of remote monitoring of the movable platform may be improved.

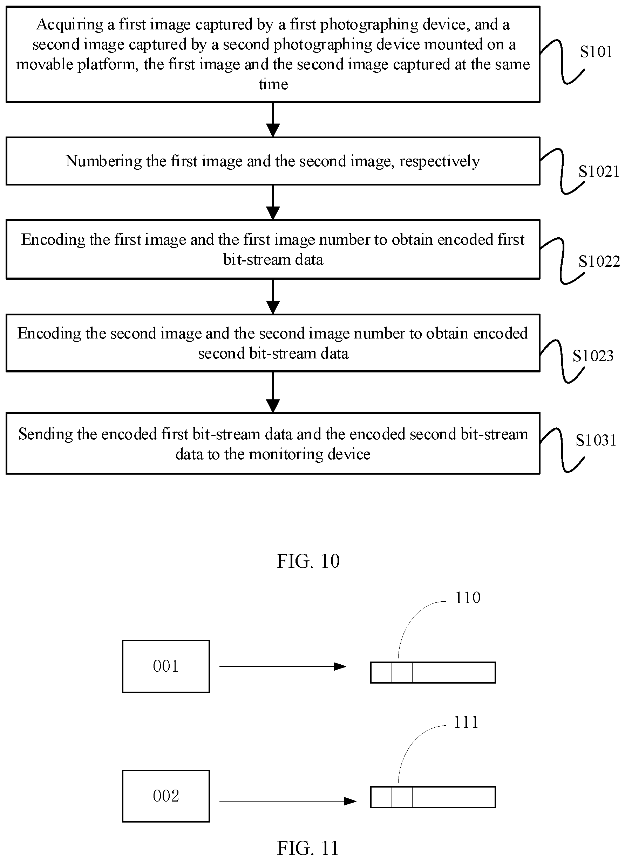

The embodiments of the present disclosure provide an image transmission method. FIG. 10 illustrates a flowchart of an image transmission method according to another embodiment of the present disclosure. As shown in FIG. 10, based on the embodiment shown in FIG. 1, another implementation method for performing image processing on the first image and the second image to obtain image-processed image data in S 102 may include the following steps.

In S 1021, numbering the first image and the second image, respectively.

For example, the processor 23 may number the first image captured by the first photographing device 21 and the second image captured by the second photographing device 22, respectively. In one example, the first image number may be 001, and the second image number may be 002.

In S1022, encoding the first image and the first image number to obtain encoded first bit-stream data.

As shown in FIG. 11, the processor 23 may encode the first image and the first image number to obtain encoded first bit-stream data 110.

In S1023, encoding the second image and the second image number to obtain encoded second bit-stream data.

As shown in FIG. 11, the processor 23 may encode the second image and the second image number to obtain encoded second bit-stream data 111.

Correspondingly, S103 of sending the image-processed image data to the monitoring device may include S1031 shown in FIG. 10: sending the encoded first bit-stream data and the encoded second bit-stream data to the monitoring device.

For example, the processor 23 may send the encoded first bit-stream data 110 and the encoded second bit-stream data 111 to the ground monitoring device 25 through the communication system 24 of the UAV 20. In one embodiment, the communication system 24 may send the encoded first bit-stream data 110 and the encoded second bit-stream data 111 to the monitoring device 25 in a predetermined order, e.g. a coding order.

According to various embodiments, the encoded first bit-stream data is obtained after encoding the first image and the first image number, and the encoded second bit-stream data is obtained after encoding the second image and the second image number. Compared with combining the first image and the second image, and encoding the combined image, the disclosed image transmission method reduces the coding rate, and in the meantime, reduces the requirement on the transmission bandwidth.

The embodiments of the present disclosure provide an image transmission method. Based on the embodiments described above, the method may further include: controlling the photographing parameters of the first photographing device and the second photographing device. As shown in FIG. 2, the processor 23 of the UAV 20 may also be able to control the photographing parameters of the first photographing device 21 and the second photographing device 22. The photographing parameters may include at least one of the following: an exposure time, a shutter speed, or an aperture size.

In one embodiment, the first image and the second image may be captured at the same time, and the photographing parameters of the first image and the second image may be the same.

In addition, the relative position of the first photographing device and the second photographing device maybe determined by simulating the relative position of the human eyes. The first photographing device and the second photographing device may be disposed at a same level on the movable platform. For example, the first photographing device 21 and the second photographing device 22 may be disposed on the UAV 20 at a same level.

Furthermore, the first photographing device and the second photographing device may be used to acquire a three-dimensional image.

The method may also include sending the three-dimensional image to a monitoring device so that the monitoring device displays the three-dimensional image through the first display device and the second display device. For example, the processor 23 may also be able to send the three-dimensional image acquired by the first photographing device 21 and the second photographing device 22 to the ground monitoring device 25 through the communication system 24 of the UAV 20. After the monitoring device 25 receives the three-dimensional image, as shown in FIG. 8 or FIG. 9, the three-dimensional image may be displayed through the first display device 27 and the second display device 28.

According to various embodiments, a three-dimensional image may be acquired by the first photographing device and the second photographing device, and the three-dimensional image may be sent to a ground monitoring device. The three-dimensional image may be able to provide a more realistic and natural picture on the monitor screen to the user, so that the user may be able to accurately determine the farness and/or nearness of objects in the picture on the monitor screen, and thus the accuracy of remote monitoring of the movable platform may be improved.

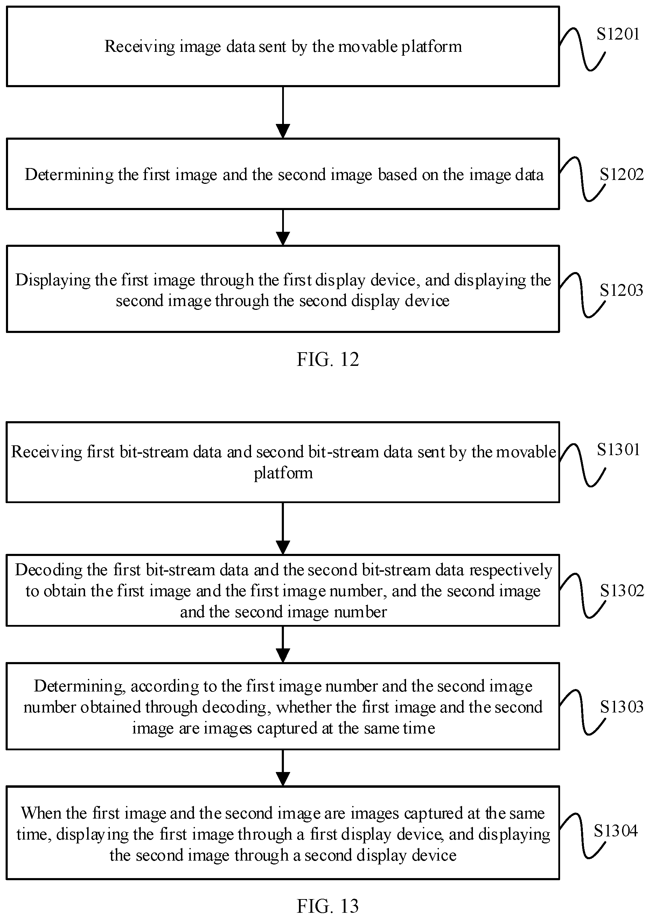

The embodiments of the present disclosure provide an image transmission method. FIG. 12 illustrates a schematic flowchart of an image transmission method according to another embodiment of the present disclosure. In one embodiment, the method may be executed by a monitoring device. As shown in FIG. 12, the method in this embodiment may include:

In S1201, receiving image data sent by the movable platform.

The image data may be obtained after the movable platform performs image processing on a first image captured by a first photographing device and a second image captured by a second photographing device. The first photographing device and the second photographing device are mounted on the movable platform, and the first image and the second image are captured at the same time.

As shown in FIG. 2, the UAV 20 may be equipped with a first photographing device 21 and a second photographing device 22. The first photographing device 21 may be, for example, a camera, and the second photographing device 22 may be, for example, another camera. The processor 23 of the UAV 20 may be able to acquire a first image captured by the first photographing device 21 and a second image captured by the second photographing device 22 at the same time. Further, the processor 23 may perform image processing on the first image and the second image to obtain image-processed image data. The image data may be sent to a ground monitoring device 25 through the communication system 24 of the UAV 20, and the monitoring device 25 may receive the image data sent by the UAV 20 through the antenna 114.

In S1202, determining the first image and the second image based on the image data.

In one embodiment, the image data is encoded image data obtained after the movable platform combines the first image and the second image to a target image and encodes the target image. In this case, determining the first image and the second image based on the image data may include: decoding the encoded image data to obtain the target image; and decomposing the target image into the first image and the second image.

As shown in FIG. 3, 31 denotes a first image captured by a first photographing device 21, 32 denotes a second image photographed by a second photographing device 22, and the processor 23 may first combine the first image 31 and the second image 32 into a target image 33. Further, the target image 33 may be encoded to obtain encoded image data 34. After the monitoring device 25 receives the image data sent by the UAV 20 through the antenna 114, the processor 26 of the monitoring device 25 may first decode the image data 34 to obtain the target image 33, and further decompose the target image 33 into the first image 31 and the second image 32.

Depending on how the target image is formed, different methods may be used to decompose the target image into the first image and the second image.

An implementation method for forming the target image includes that: the target image may be obtained after the movable platform splices the first image and the second image left and right. Correspondingly, the decomposing the target image into the first image and the second image may include: decomposing the target image left and right to obtain the first image and the second image.

As shown in FIG. 4, the first image 31 may be spliced to the left side of the second image 32 to obtain the spliced target image 33. Alternatively, as shown in FIG. 5, the first image 31 may be spliced to the right side of the second image 32 to obtain the spliced target image 33. In this case, the processor 26 of the monitoring device 25 may decompose the target image 33 left and right to obtain the first image 31 and the second image 32.

Another implementation method for forming the target image includes that: the target image may be obtained after the movable platform splices the first image and the second image up and down. Correspondingly, the decomposing the target image into the first image and the second image may include: decomposing the target image up and down to obtain the first image and the second image.

As shown in FIG. 6, the first image 31 may be spliced to the upper side of the second image 32 to obtain the spliced target image 33. Alternatively, as shown in FIG. 5, the first image 31 may be spliced to the lower side of the second image 32 to obtain the spliced target image 33. In this case, the processor 26 of the monitoring device 25 may decompose the target image 33 left and right to obtain the first image 31 and the second image 32.

In S1203, displaying the first image through the first display device, and displaying the second image through the second display device.

As shown in FIG. 8 or FIG. 9, the processor 26 of the monitoring device 25 may display the first image 31 through the first display device 27 and display the second image 32 through the second display device 28, or display the second image 32 through the first display device 27 and display the first image 31 through the second display device 28. The first display device 27 may be, for example, a display screen, and the second display device 28 may be, for example, another display screen.

According to various embodiments, two images captured at the same time respectively by two photographing devices mounted on a movable platform are acquired, image processing is performed on the two images to obtain image data, the image data is sent to a monitoring device, and the monitoring device restores the two images based on the image data and displays one image through each of two display devices, such that the picture on the monitor screen observed by the user through the two display devices is more in line with the visual characteristics of the human eye, and thus lack of parallax information or depth information in the picture on the monitor screen can be avoided. The user may be able to accurately determine the farness and/or nearness of objects in the picture on the monitor screen, and thus the accuracy of remote monitoring of the movable platform may be improved.

The embodiments of the present disclosure provide an image transmission method. FIG. 13 illustrates a flowchart of an image transmission method according to another embodiment of the present disclosure. The method of this embodiment may be executed by a monitoring device. As shown in FIG. 13, in one embodiment, the method may include:

In S1301, receiving first bit-stream data and second bit-stream data sent by the movable platform.

The first bit-stream data may be obtained after the movable platform encodes the first image and the first image number, and the second bit-stream data may be obtained after the movable platform encodes the second image and the second image number.

As shown in FIG. 11, the processor 23 may number the first image captured by the first imaging device 21 and the second image captured by the second imaging device 22, respectively. For example, the first image number may be 001, and the second image number may be 002. The processor 23 may encode the first image and the first image number to obtain the encoded first bit-stream data 110. The processor 23 may encode the second image and the second image number to obtain the encoded second bit-stream data 111. The processor 23 may send the encoded first bit-stream data 110 and the encoded second bit-stream data 111 to the ground monitoring device 25 through the communication system 24 of the UAV 20. The monitoring device 25 may receive the encoded first bit-stream data 110 and the encoded second bit-stream data 111 sent by the communication system 24 through the antenna 114.

In S1302, decoding the first bit-stream data and the second bit-stream data respectively to obtain the first image and the first image number, and the second image and the second image number.

Further, the processor 26 of the monitoring device 25 may decode the first bit-stream data 110 and the second bit-stream data 111, respectively to obtain the first image and the first image number 001, and the second image and the second image number 002.

In S1303, determining, according to the first image number and the second image number obtained through decoding, whether the first image and the second image are images captured at the same time.

The processor 26 of the monitoring device 25 may determine, according to the first image number 001 and the second image number 002, whether the first image and the second image are images captured at the same time.

For example, the determining, according to the first image number and the second image number obtained through decoding, whether the first image and the second image are images captured at the same time, may include: when the first image number and the second image number obtained through decoding match each other, determining that the first image and the second image are images captured at the same time.

For example, the processor 23 of the UAV 20 respectively numbers the first image and the second image captured at the same time according to a preset numbering rule, and the processor 26 of the monitoring device 25 may be able to determine, according to the preset numbering rule, whether the first image number 001 and the second image number 002 conform to the preset numbering rule. For example, in the preset numbering rule: 001 and 002 are a pair of numbers, 003 and 004 are a pair of numbers, 1 and 10001 are a pair of numbers, 2 and 10002 are a pair of numbers, etc. This is merely a schematic description and is not limited to any specific number. Then, after the processor 26 of the monitoring device 25 decodes the first bit-stream data 110 and the second bit-stream data 111, respectively to obtain the first image and the first image number 001, and the second image and the second image number 002, 001 and 002 may be determined as a pair of numbers, which indicates that the first image and the second image are a pair of images captured at the same time.

In S1304, when the first image and the second image are images captured at the same time, displaying the first image through a first display device, and displaying the second image through a second display device.

After the processor 26 of the monitoring device 25 determines that the first image and the second image are a pair of images captured at the same time according to S1303 described above, as shown in FIG. 8 or FIG. 9, the processor 26 of the monitoring device 25 may display the first image 31 through the first display device 27 and display the second image 32 through the second display device 28, or display the second image 32 through the first display device 27 and display the first image 31 through the second display device 28. The first display device 27 may be, for example, a display screen, and the second display device 28 may be, for example, another display screen.

According to various embodiments, the encoded first bit-stream data is obtained after encoding the first image and the first image number, and the encoded second bit-stream data is obtained after encoding the second image and the second image number. Compared with combining the first image and the second image, and encoding the combined image, the disclosed image transmission method reduces the coding rate, and in the meantime, reduces the requirement on the transmission bandwidth.

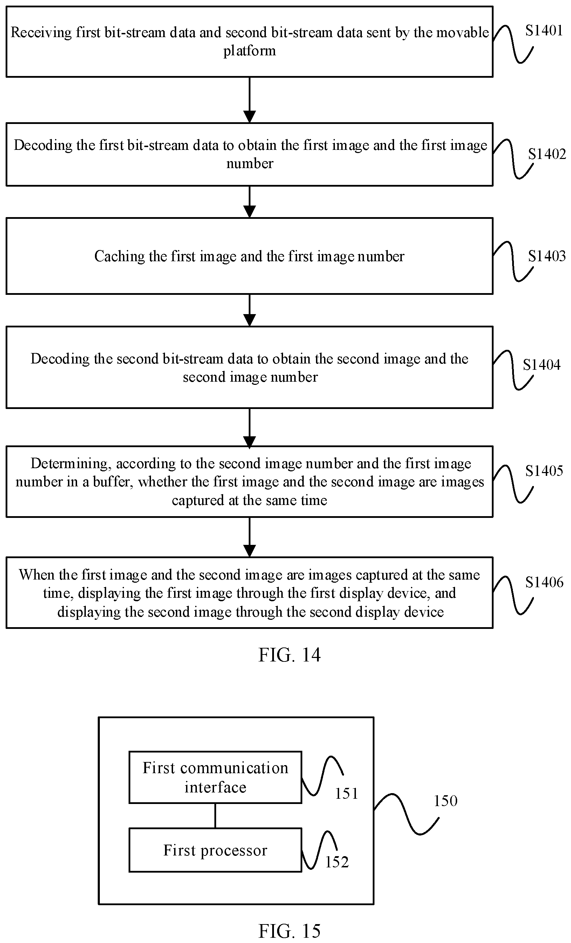

The embodiments of the present disclosure provide an image transmission method. FIG. 14 illustrates a flowchart of an image transmission method according to another embodiment of the present disclosure. The method of this embodiment may be executed by a monitoring device. As shown in FIG. 14, the method in this embodiment may include:

In S1401, receiving first bit-stream data and second bit-stream data sent by the movable platform.

The first bit-stream data may be obtained after the movable platform encodes the first image and the first image number, and the second bit-stream data may be obtained after the movable platform encodes the second image and the second image number.

The specific principle and implementation method of S1401 are similar to S1301, and the details are not described herein again.

In S1402, decoding the first bit-stream data to obtain the first image and the first image number.

After the monitoring device 25 receives the encoded first bit-stream data 110 and the encoded second bit-stream data 111 sent by the communication system 24 through the antenna 114, the processor 26 of the monitoring device 25 may decode the first bit-stream data 110 to obtain the first image and the first image number 001.

In S1403, caching the first image and the first image number.

In one embodiment, the monitoring device 25 may further include a buffer. After the processor 26 decodes the first bit-stream data 110 to obtain the first image and the first image number 001, the first image and the first image number 001 may be cached in the buffer first.

In S1404, decoding the second bit-stream data to obtain the second image and the second image number.

Further, the processor 26 of the monitoring device 25 may decode the second bit-stream data 111 to obtain the second image and the second image number 002.

In S1405, determining, according to the second image number and the first image number in the buffer, whether the first image and the second image are images captured at the same time.

The processor 26 may determine, according to the second image number 002 and the first image number 001 in the buffer, whether the first image and the second image are images captured at the same time.

In one embodiment, when the second image number matches the first image number in the buffer, it may be determined that the first image and the second image are images captured at the same time. For example, in the preset numbering rule, it may be prescribed that 001 and 002 are a pair of numbers, 003 and 004 are a pair of numbers, etc.; then, the second image number 002 matching the first image number 001 in the buffer may indicate that the first image and the second image are a pair of images captured at the same time.

In S1406, when the first image and the second image are images captured at the same time, displaying the first image through the first display device, and displaying the second image through the second display device.

After the processor 26 of the monitoring device 25 determines that the first image and the second image are a pair of images captured at the same time according to S1303 described above, as shown in FIG. 8 or FIG. 9, the processor 26 of the monitoring device 25 may display the first image 31 through the first display device 27 and display the second image 32 through the second display device 28, or display the second image 32 through the first display device 27 and display the first image 31 through the second display device 28. The first display device 27 may be, for example, a display screen, and the second display device 28 may be, for example, another display screen.

In addition, in one embodiment, the first photographing device and the second photographing device may be used to acquire a three-dimensional image. The method may further include receiving the three-dimensional image sent by the movable platform; and displaying the three-dimensional image through the first display device and the second display device.

In one embodiment, the first photographing device 21 and the second photographing device 22 may be disposed at a same level on the UAV 20. The relative position of the first photographing device 21 and the second photographing device 22 may be determined by simulating the relative position of the human eyes. The first photographing device 21 and the second photographing device 22 may also be used to acquire a three-dimensional image. In this case, the processor 23 may also be able to send the three-dimensional image acquired by the first photographing device 21 and the second photographing device 22 to the ground monitoring device 25 by the communication system 24 of the UAV 20. After the monitoring device 25 receives the three-dimensional image, as shown in FIG. 8 or FIG. 9, the three-dimensional image may be displayed through the first display device 27 and the second display device 28.

According to various embodiments, a three-dimensional image may be acquired by the first photographing device and the second photographing device, and the three-dimensional image may be sent to a ground monitoring device. The three-dimensional image may be able to provide a more realistic and natural picture on the monitor screen for the user, so that the user may be able to accurately determine the farness and/or nearness of objects in the picture on the monitor screen, and thus the accuracy of remote monitoring of the movable platform may be improved.

The embodiments of the present disclosure provide an image transmission device. FIG. 15 illustrates a structural diagram of an image transmission device according to an embodiment of the present disclosure. As shown in FIG. 15, the image transmission device 150 may include: a first communication interface 151 and a first processor 152. The first processor 152 may be configured to acquire a first image captured by a first photographing device mounted on a movable platform, and a second image captured by a second photographing device mounted on the movable platform. The first image and the second image may be captured at the same time. Image processing may be performed on the first image and the second image to obtain image-processed image data. The first communication interface 151 may be configured to send the image-processed image data to the monitoring device, so that the monitoring device determines the first image and the second image based on the image data, and displays the first image through a first display device and displays the second image through a second display device.

In one embodiment, when performing image processing on the first image and the second image to obtain the image-processed image data, the first processor 152 may be configured to: combine the first image and the second image into a target image; and encode the target image to obtain encoded image data.

The first processor 152 combining the first image and the second image into the target image may include the following possible cases.

One possible case includes that the first image and the second image may be spliced left and right to obtain the target image.

Another possible case includes that the first image and the second image may be spliced up and down to obtain the target image.

The specific principles and implementation methods of the image transmission device provided by the embodiments of the present disclosure are similar to the embodiment shown in FIG. 1 and the details are not described herein again.

According to various embodiments, two images captured at the same time respectively by two photographing devices mounted on a movable platform are acquired, image processing is performed on the two images to obtain image data, the image data is sent to a monitoring device, and the monitoring device restores the two images based on the image data and displays one image through each of two display devices, such that the picture on the monitor screen observed by the user through the two display devices is more in line with the visual characteristics of the human eye, and thus lack of parallax information or depth information in the picture on the monitor screen can be avoided. The user may be able to accurately determine the farness and/or nearness of objects in the picture on the monitor screen, and thus the accuracy of remote monitoring of the movable platform may be improved.

The embodiments of the present disclosure provide an image transmission device. On the basis of the technical solution provided by the embodiment shown in FIG. 15, the first processor 152 performing image processing on the first image and the second image to obtain the image-processed image data may include: numbering the first image and the second image, respectively; encoding the first image and the first image number to obtain encoded first bit-stream data; and encoding the second image and the second image number to obtain encoded second bit-stream data.

Accordingly, when sending the image-processed image data to the monitoring device, the first communication interface 151 may be configured to send the encoded first bit-stream data and the encoded second bit-stream data to the monitoring device.

In one embodiment, the first processor 152 may be further configured to control the photographing parameters of the first photographing device and the second photographing device. The photographing parameters may include at least one of the following: an exposure time, a shutter speed, or an aperture size.

In one embodiment, the photographing parameters for the first image and the second image may be the same. The relative position of the first photographing device and the second photographing device maybe determined by simulating the relative position of the human eyes. The first photographing device and the second photographing device may be disposed at a same level on the movable platform. The first photographing device and the second photographing device may be used to capture a three-dimensional image.

The first communication interface 151 may be further configured to send the three-dimensional image to the monitoring device, so that the monitoring device displays the three-dimensional image through a first display device and a second display device.

In one embodiment, the first processor 152 may include at least one of the following: a complex programmable logic device (CPLD), a field programmable gate array (FPGA), or a bridge chip.

The specific principles and implementation methods of the image transmission device provided by the embodiment of the present disclosure are similar to the embodiment shown in FIG. 10, and the details are not described herein again.

According to various embodiments, the encoded first bit-stream data is obtained after encoding the first image and the first image number, and the encoded second bit-stream data is obtained after encoding the second image and the second image number. Compared with combining the first image and the second image, and encoding the combined image, the disclosed image transmission method reduces the coding rate, and in the meantime, reduces the requirement on the transmission bandwidth. In addition, a three-dimensional image may be acquired by the first photographing device and the second photographing device, and the three-dimensional image may be sent to a ground monitoring device. The three-dimensional image may be able to provide a more realistic and natural picture on the monitor screen for the user, so that the user may be able to accurately determine the farness and/or nearness of objects in the picture on the monitor screen, and thus the accuracy of remote monitoring of the movable platform may be improved

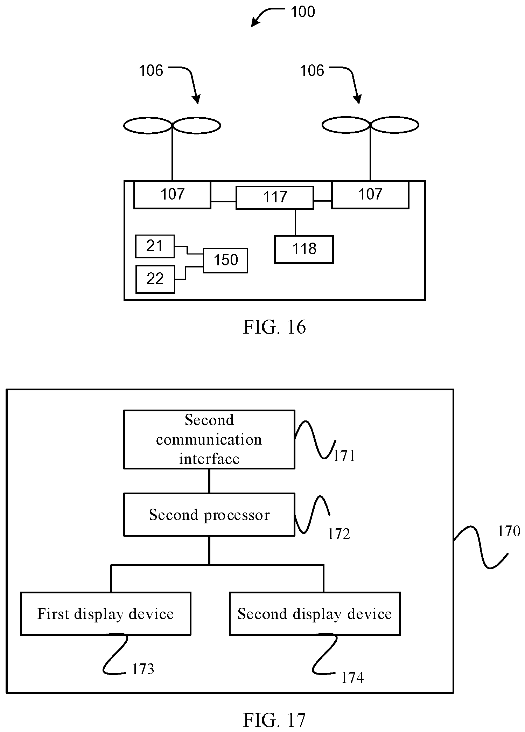

The embodiments of the present disclosure provides a movable platform. The movable platform may include at least one of the following: a UAV, a movable robot, a model airplane, a remote-control vehicle, or a remote-control boat. In one embodiment, the movable platform is, for example, a UAV. FIG. 16 illustrates a structural diagram of a UAV according to an embodiment of the present disclosure. As shown in FIG. 16, the UAV 100 may include: a fuselage, a propulsion system, and a flight controller 118. The propulsion system may include at least one of the following: a motor 107, a propeller 106, or an electronic speed control 117. The propulsion system may be mounted to the fuselage for providing flight propulsion; and the flight controller 118 may be communicatively connected to the propulsion system for controlling the UAV to fly.

In addition, as shown in FIG. 16, the UAV 100 may further include: a first photographing device 21, a second photographing device 22, and an image transmission device 150. The specific principles and implementation methods of the image transmission device 150 are similar to the embodiments described above, and the details are not described herein again.

According to various embodiments, two images captured at the same time respectively by two photographing devices mounted on a movable platform are acquired, image processing is performed on the two images to obtain image data, the image data is sent to a monitoring device, and the monitoring device restores the two images based on the image data and displays one image through each of two display devices, such that the picture on the monitor screen observed by the user through the two display devices is more in line with the visual characteristics of the human eye, and thus lack of parallax information or depth information in the picture on the monitor screen can be avoided. The user may be able to accurately determine the farness and/or nearness of objects in the picture on the monitor screen, and thus the accuracy of remote monitoring of the movable platform may be improved.

The embodiments of the present disclosure provides a monitoring device. FIG. 17 illustrates a structural diagram of a monitoring device according to an embodiment of the present disclosure. Referring to FIG. 17, the monitoring device 170 may include: a second communication interface 171, a second processor 172, a first display device 173, and a second display device 174. The second communication interface 171 may be configured to: receive the image data sent by the movable platform. The image data may be obtained after the movable platform performs image processing on a first image captured by a first photographing device and a second image captured by a second photographing device. The first photographing device and the second photographing device may be mounted on the movable platform, and the first image and the second image may be captured at the same time. The second processor 172 may be configured to: determine the first image and the second image based on the image data; and display the first image through the first display device 173, and display the second image through the second display device 174.

In one embodiment, the image data may be encoded image data obtained after the movable platform combines the first image and the second image into a target image and encodes the target image. Correspondingly, when determining the first image and the second image based on the image data, the second processor 172 may be configured to decode the encoded image data to obtain the target image; and decompose the target image into the first image and the second image.

For example, the target image may have the following formation methods.

One possible formation method includes that the target image may be obtained after the movable platform splices the first image and the second image left and right. In this case, when decomposing the target image to obtain the first image and the second image, the second processor 172 may be configured to decompose the target image left and right to obtain the first image and the second image.

Another possible formation method includes that the target image may be obtained after the movable platform splices the first image and the second image up and down. In this case, when decomposing the target image to obtain the first image and the second image, the second processor 172 may be configured to decompose the target image up and down to obtain the first image and the second image.

In other embodiments, the first display device 173 and the second display device 174 may be external devices of the monitoring device 170.

The specific principles and implementation methods of the monitoring device provided by the embodiment of the present disclosure are similar to the embodiment shown in FIG. 12, and the details are not described herein again.

According to various embodiments, two images captured at the same time respectively by two photographing devices mounted on a movable platform are acquired, image processing is performed on the two images to obtain image data, the image data is sent to a monitoring device, and the monitoring device restores the two images based on the image data and displays one image through each of two display devices, such that the picture on the monitor screen observed by the user through the two display devices is more in line with the visual characteristics of the human eye, and thus lack of parallax information or depth information in the picture on the monitor screen can be avoided. The user may be able to accurately determine the farness and/or nearness of objects in the picture on the monitor screen, and thus the accuracy of remote monitoring of the movable platform may be improved.

The embodiments of the present disclosure provide a monitoring device. On the basis of the technical solution provided by the embodiment shown in FIG. 17, when receiving the image data sent by the movable platform, the second communication interface 171 may be specifically configured to: receive first bit-stream data and second data sent by the movable platform. The first bit-stream data may be obtained after the movable platform encodes the first image and the first image number, and the second bit-stream data may be obtained after the movable platform encodes the second image and the second image number.

When determining the first image and the second image based on the image data, the second processor 172 may be configured to decode the first bit-stream data and the second bit-stream data respectively to obtain the first image and the first image number, and the second image and the second image number.

After decoding the first bit-stream data and the second bit-stream data respectively to obtain the first image and the first image number, and the second image and the second image number, the second processor 172 may be further configured to determine, according to the first image number and the second image number obtained through decoding, whether the first image and the second image are images captured at the same time.

In one embodiment, when determining, according to the first image number and the second image number obtained through decoding, whether the first image and the second image are images captured at the same time, the second processor 172 may be configured to determine whether the first image number and the second image number obtained through decoding match each other; and when the first image number and the second image number obtained through decoding match each other, determine that the first image and the second image are images captured at the same time.

The specific principles and implementation methods of the monitoring device provided by the embodiment of the present disclosure are similar to the embodiment shown in FIG. 13, and the details are not described herein again.

According to various embodiments, the encoded first bit-stream data is obtained after encoding the first image and the first image number, and the encoded second bit-stream data is obtained after encoding the second image and the second image number. Compared with combining the first image and the second image, and encoding the combined image, the disclosed image transmission method reduces the coding rate, and in the meantime, reduces the requirement on the transmission bandwidth.

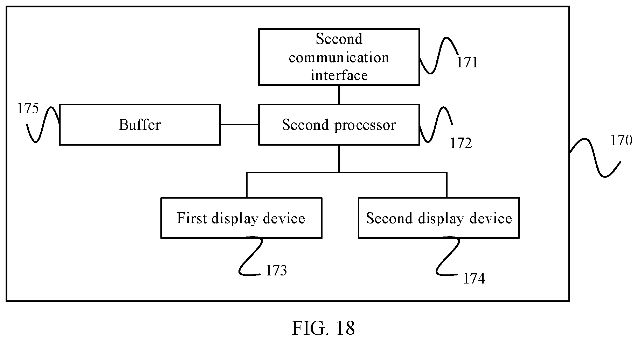

The embodiments of the present disclosure provide a monitoring device. The monitoring device may include at least one of the following: a remote controller, a user terminal device, or headwear glasses. FIG. 18 illustrates a structural diagram of a monitoring device according to another embodiment of the present disclosure. Referring to FIG. 18, on the basis of the technical solution provided by the embodiment shown in FIG. 17, the monitoring device 170 may further include: a buffer 175. When decoding the first bit-stream data and the second bit-stream data respectively to obtain the first image and the first image number, and the second image and the second image number, the second processor 172 may be configured to decode the first bit-stream data to obtain the first image and the first image number; cache the first image and the first image number into the buffer 175; and decode the second bit-stream data to obtain the second image and the second image number.

After decoding the second bit-stream data to obtain the second image and the second image number, the second processor 172 may be further configured to determine, according to the second image number and the first image number in the buffer, whether the first image and the second image are images captured at the same time.

For example, when determining, according to the second image number and the first image number in the buffer, whether the first image and the second image are images captured at the same time, the second processor 172 may be configured to determine whether the second image number and the first image number in the buffer match each other; and when the second image number and the first image number in the buffer match each other, determine that the first image and the second image are images captured at the same time.

The first photographing device and the second photographing device may be used to acquire a three-dimensional image. In one embodiment, the second communication interface 171 may be further configured to: receive the three-dimensional image sent by the movable platform; and display the three-dimensional image through a first display device and a second display device.

In one embodiment, the second processor 172 may include at least one of the following: a CPLD, an FPGA, or a bridge chip.

The specific principles and implementation methods of the monitoring device provided by the embodiment of the present disclosure are similar to the embodiment shown in FIG. 14, and the details are not described herein again.

According to various embodiments, a three-dimensional image may be acquired by the first photographing device and the second photographing device, and the three-dimensional image may be sent to a ground monitoring device. The three-dimensional image may be able to provide a more realistic and natural picture on the monitor screen for the user, so that the user may be able to accurately determine the farness and/or nearness of objects in the picture on the monitor screen, and thus the accuracy of remote monitoring of the movable platform may be improved.

The embodiments of the present disclosure provide an image transmission system. As shown in FIG. 2, FIG. 8, or FIG. 9, the image transmission system may include a movable platform, such as a UAV 20 and a monitoring device 25.

In the various embodiments provided by the present application, it should be understood that the disclosed systems, devices, and methods may be implemented in other manners. For example, the device embodiments described above are merely illustrative. For instance, in various embodiments of the present disclosure, the units are divided or defined merely according to the logical functions of the units, and in actual applications, the units may be divided or defined in another manner. For example, multiple units or components may be combined or integrated into another system, or some features can be ignored or not executed. In addition, the mutual coupling or direct coupling or communication connection shown or discussed may be an indirect coupling or communication connection through some interface, device or unit, and may be in an electrical, mechanical, or other form.

The units described as separate components may or may not be physically separated, and the components displayed as a unit may or may not be physical in a unit, that is, they may be located in one place, or may be distributed to multiple network units. Some or all of the units may be selected according to actual needs to achieve the purpose of the solution of the embodiment.

In addition, each functional unit in each embodiment of the present application may be integrated into one processing unit, or each unit may exist physically separately, or two or more units may be integrated into one unit.

The above-described integrated unit implemented in the form of a software functional unit can be stored in a computer readable storage medium. The above software functional unit is stored in a storage medium and includes instructions for making a computer device (which may be a personal computer, a server, or a network device, etc.) or a processor perform part of the steps of the methods according to the various embodiments of the present disclosure. The storage medium described above may include various media that can store program codes, such as a U disk, a movable hard disk, a read-only memory (ROM), a random access memory (RAM), a magnetic disk, an optical disk, etc.

Those skilled in the art should clearly understand that for the convenience and simplicity of the description, only the division of the above functional modules examples is illustrated. In practical applications, the above function assignment can be completed by different functional modules according to needs, that is, the internal structure of the device may be divided into different functional modules to implement all or part of the functions described above. For the specific operation process of the device described above, reference may be made to the corresponding process in the aforementioned method embodiments, and details are not described herein again.

Finally, it should be noted that the above embodiments are merely illustrative of, but not intended to limit, the technical solutions of the present invention; although the present disclosure has been described in detail with reference to the above embodiments, those skilled in the art should understand that the technical solutions described in the above embodiments may be modified, or part or all of the technical features may be equivalently replaced; and the modifications or substitutions do not depart from the scope of the technical solutions of the embodiments of the present disclosure.

## Claims

1. An image transmission method, comprising:
acquiring a first image captured by a first photographing device, and a second image captured by a second photographing device mounted on a movable platform, wherein the first image and the second image are captured at a same time;
performing image processing on the first image and the second image to obtain image-processed image data; and
sending the image-processed image data to a monitoring device, so that the monitoring device determines the first image and the second image based on the image data, and displays the first image through a first display device and displays the second image through a second display device.

2. The method according to claim 1, wherein the performing of the image processing on the first image and the second image to obtain the image-processed image data includes:
combining the first image and the second image into a target image; and
encoding the target image to obtain encoded image data.

3. The method according to claim 2, wherein the combining of the first image and the second image into the target image includes:
splicing the first image and the second image left and right to obtain the target image.

4. The method according to claim 2, wherein the combining of the first image and the second image into the target image includes:
splicing the first image and the second image up and down to obtain the target image.

5. The method according to claim 1, wherein the performing of the image processing on the first image and the second image to obtain the image-processed image data includes:
numbering the first image and the second image, respectively;
encoding the first image and a first image number to obtain encoded first bit-stream data; and
encoding the second image and a second image number to obtain encoded second bit-stream data.

6. The method according to claim 5, wherein the sending of the image-processed image data to the monitoring device includes:
sending the encoded first bit-stream data and the encoded second bit-stream data to the monitoring device.

7. The method according to claim 1, further including:
controlling photographing parameters of the first photographing device and the second photographing device.

8. The method according to claim 7, wherein the photographing parameters includes at least one of:
an exposure time, a shutter speed, or an aperture size.

9. The method according to claim 8, wherein:
the photographing parameters of the first image and the second image are same.

10. The method according to any one of claims 1-9, wherein:
a relative position of the first photographing device and the second photographing device is determined by simulating a relative position of human eyes.

11. The method according to claim 10, wherein:
the first photographing device and the second photographing are disposed on the movable platform at a same level.

12. The method according to claim 11, wherein:
the first photographing device and the second photographing device are used to acquire a three-dimensional image.

13. The method according to claim 12, further including:
sending the three-dimensional image to the monitoring device, so that the monitoring device displays the three-dimensional image through the first display device and the second display device.

14. The method according to claim 1, wherein the movable platform includes at least one of:
an unmanned aerial vehicle, a movable robot, a model airplane, a remote-control vehicle, or a remote-control boat.

15. The method according to claim 1, wherein the monitoring device includes at least one of:
a remote controller, a user terminal device, or headwear glasses.

16. An image transmission method, comprising:
receiving image data sent by a movable platform, wherein the image data is obtained after the movable platform performs image processing on a first image captured by a first photographing device and a second image captured by a second photographing device, wherein the first photographing device and the second photographing device are mounted on the movable platform, and the first image and the second image are captured at a same time;
determining the first image and the second image based on the image data; and
displaying the first image through a first display device, and displaying the second image through a second display device.

17. The method according to claim 16, wherein:
the image data is encoded image data obtained after the movable platform combines the first image and the second image into a target image and encodes the target image.

18. The method according to claim 17, wherein the determining of the first image and the second image based on the image data includes:
decoding the encoded image data to obtain the target image; and
decomposing the target image into the first image and the second image.

19. The method according to claim 18, wherein:
the target image is obtained after the movable platform splices the first image and the second image left and right.

20. The method according to claim 19, wherein the decomposing of the target image into the first image and the second image includes:
decomposing the target image left and right to obtain the first image and the second image.

21. The method according to claim 18, wherein:
the target image is obtained after the movable platform splices the first image and the second image up and down.

22. The method according to claim 19, wherein the decomposing of the target image into the first image and the second image includes:
decomposing the target image up and down to obtain the first image and the second image.

23. The method according to claim 16, wherein the receiving of the image data sent by the movable platform includes:
receiving first bit-stream data and second bit-stream data sent by the movable platform, wherein the first bit-stream data is obtained after the movable platform encodes the first image and a first image number, and the second bit-stream data is obtained after the movable platform encodes the second image and a second image number.

24. The method according to claim 23, wherein the determining of the first image and the second image based on the image data includes:
decoding the first bit-stream data and the second bit-stream data respectively to obtain the first image and the first image number, and the second image and the second image number.

25. The method according to claim 24, after the decoding of the first bit-stream data and the second bit-stream data respectively to obtain the first image and the first image number, and the second image and the second image number, further including:
determining, according to the first image number and the second image number obtained through decoding, whether the first image and the second image are images captured at a same time.

26. The method according to claim 24, wherein the determining, according to the first image number and the second image number obtained through decoding, of whether the first image and the second image are images captured at the same time includes:
when the first image number and the second image number obtained through decoding match each other, determining that the first image and the second image are images captured at the same time.

27. The method according to claim 24, wherein the decoding of the first bit-stream data and the second bit-stream data respectively to obtain the first image and the first image number, and the second image and the second image number includes:
decoding the first bit-stream data to obtain the first image and the first image number;
caching the first image and the first image number; and
decoding the second bit-stream data to obtain the second image and the second image number.

28. The method according to claim 27, after decoding the second bit-stream data to obtain the second image and the second image number, further including:
determining, according to the second image number and the first image number in a buffer, whether the first image and the second image are images captured at the same time.

29. The method according to claim 28, wherein the determining, according to the second image number and the first image number in the buffer, of whether the first image and the second image are images captured at the same time includes:
when the second image number matches the first image number in the buffer, determining that the first image and the second image are images captured at the same time.

30. The method according to claim 16, wherein:
the first photographing device and the second photographing device are used to acquire a three-dimensional image.

31. The method according to claim 30, further including:
receiving the three-dimensional image sent by the movable platform; and
displaying the three-dimensional image through the first display device and the second display device.

32. An image transmission device, comprising a first communication interface and a first processor, wherein:
the first processor is configured to:
acquire a first image captured by a first photographing device, and a second image captured by a second photographing device mounted on a movable platform, wherein the first image and the second image are captured at a same time, and
perform image processing on the first image and the second image to obtain image-processed image data; and
the first communication interface is configured to:
send the image-processed image data to a monitoring device, so that the monitoring device determines the first image and the second image based on the image data, and displays the first image through a first display device and displays the second image through a second display device.

33. The image transmission device according to claim 32, wherein when performing image processing on the first image and the second image to obtain image-processed image data, the first processor is configured to:
combine the first image and the second image into a target image; and
encode the target image to obtain encoded image data.

34. The image transmission device according to claim 33, wherein when combining the first image and the second image into the target image, the first processor is configured to:
splice the first image and the second image left and right to obtain the target image.

35. The image transmission device according to claim 33, wherein when combining the first image and the second image into the target image, the first processor is configured to:
splice the first image and the second image up and down to obtain the target image.

36. The image transmission device according to claim 32, wherein the first processor performing image processing on the first image and the second image to obtain image-processed image data includes:
numbering the first image and the second image, respectively;
encoding the first image and the first image number to obtain encoded first bit-stream data; and
encoding the second image and the second image number to obtain encoded second bit-stream data.

37. The image transmission device according to claim 36, when sending the image-processed image data to the monitoring device, the first communication interface is configured to:
send the encoded first bit-stream data and the encoded second bit-stream data to the monitoring device.

38. The image transmission device according to claim 32, wherein the first processor is further configured to:
control photographing parameters of the first photographing device and the second photographing device.

39. The image transmission device according to claim 38, wherein the photographing parameters includes at least one of:
an exposure time, a shutter speed, or an aperture size.

40. The image transmission device according to claim 39, wherein:
the photographing parameters of the first image and the second image are same.

41. The image transmission device according to any one of claims 32-40, wherein:
a relative position of the first photographing device and the second photographing device is determined by simulating a relative position of human eyes.

42. The image transmission device according to claim 41, wherein:
the first photographing device and the second photographing are disposed on the movable platform at a same level.

43. The image transmission device according to claim 42, wherein:
the first photographing device and the second photographing device are used to acquire a three-dimensional image.

44. The image transmission device according to claim 43, wherein the first communication interface is further configured to:
send the three-dimensional image to the monitoring device, so that the monitoring device displays the three-dimensional image through the first display device and the second display device.

45. The image transmission device according to any one of claims 32-44, wherein the first processor includes at least one of:
a complex programmable logic device (CPLD), a field programmable gate array (FPGA), or a bridge chip.

46. A movable platform, comprising:
a fuselage;
a propulsion system, installed on the fuselage, and configured to provide propulsion;
a controller, communicatively connected to the propulsion system, and configured to control movement of the movable platform; and
an image transmission device according to any one of claims 32-45.

47. The movable platform according to claim 46, wherein the movable platform includes at least one of:
an unmanned aerial vehicle, a movable robot, a model airplane, a remote-control vehicle, or a remote-control boat.

48. A monitoring device, comprising a second communication interface, a second processor, a first display device, and a second display device, wherein:
the second communication interface is configured to:
receive image data sent by a movable platform, wherein the image data is obtained after the movable platform performs image processing on a first image captured by a first photographing device and a second image captured by a second photographing device, wherein the first photographing device and the second photographing device are mounted on the movable platform, and the first image and the second image are captured at a same time; and
the second processor is configured to:
determine the first image and the second image based on the image data; and
display the first image through the first display device, and display the second image through the second display device.

49. The monitoring device according to claim 48, wherein:
the image data is encoded image data obtained after the movable platform combines the first image and the second image into a target image and encodes the target image.

50. The monitoring device according to claim 49, wherein when determining the first image and the second image based on the image data, the second processor is configured to:
decode the encoded image data to obtain the target image; and
decompose the target image into the first image and the second image.

51. The monitoring device according to claim 50, wherein:
the target image is obtained after the movable platform splices the first image and the second image left and right.

52. The monitoring device according to claim 51, wherein when decomposing the target image to obtain the first image and the second image, the second processor is configured to:
decompose the target image left and right to obtain the first image and the second image.

53. The monitoring device according to claim 50, wherein:
the target image is obtained after the movable platform splices the first image and the second image up and down.

54. The monitoring device according to claim 53, wherein when decomposing the target image to obtain the first image and the second image, the second processor is configured to:
decompose the target image up and down to obtain the first image and the second image.

55. The monitoring device according to claim 48, wherein when receiving the image data sent by the movable platform, the second communication interface is configured to:
receive first bit-stream data and second data sent by the movable platform, wherein the first bit-stream data is obtained after the movable platform encodes the first image and the first image number, and the second bit-stream data is obtained after the movable platform encodes the second image and the second image number.

56. The monitoring device according to claim 55, wherein when determining the first image and the second image based on the image data, the second processor is configured to:
decode the first bit-stream data and the second bit-stream data respectively to obtain the first image and the first image number, and the second image and the second image number.

57. The monitoring device according to claim 56, wherein when decoding the first bit-stream data and the second bit-stream data respectively to obtain the first image and the first image number, and the second image and the second image number, the second processor is further configured to:
determine, according to the first image number and the second image number obtained through decoding, whether the first image and the second image are images captured at the same time.

58. The monitoring device according to claim 57, wherein when determining, according to the first image number and the second image number obtained through decoding, whether the first image and the second image are images captured at the same time, the second processor is configured to:
determine whether the first image number and the second image number obtained through decoding match each other; and
when the first image number and the second image number obtained through decoding match each other, determine that the first image and the second image are images captured at the same time.

59. The monitoring device according to claim 56, further including a buffer:
when decoding the first bit-stream data and the second bit-stream data respectively to obtain the first image and the first image number, and the second image and the second image number, the second processor is configured to:
decode the first bit-stream data to obtain the first image and the first image number;
cache the first image and the first image number; and
decode the second bit-stream data to obtain the second image and the second image number.

60. The monitoring device according to claim 59, wherein after decoding the second bit-stream data to obtain the second image and the second image number, the second processor is further configured to:
determine, according to the second image number and the first image number in a buffer, whether the first image and the second image are images captured at the same time.

61. The monitoring device according to claim 60, wherein the second processor determining, according to the second image number and the first image number in the buffer, whether the first image and the second image are images captured at the same time includes:
determine whether the second image number matches the first image number in the buffer; and
when the second image number matches the first image number in the buffer, determine that the first image and the second image are images captured at the same time.

62. The monitoring device according to claim 48, wherein:
the first photographing device and the second photographing device are used to acquire a three-dimensional image.

63. The monitoring device according to claim 62, wherein the second communication interface is further configured to:
receive the three-dimensional image sent by the movable platform; and
the second processor is configured to display the three-dimensional image through the first display device and the second display device.

64. The monitoring device according to any of claims 48-63, wherein the monitoring device includes at least one of:
a remote controller, a user terminal device, or headwear glasses.

65. The monitoring device according to any of claims 48-63, wherein the second processor includes at least one of:
a CPLD, a FPGA, or a bridge chip.

66. An image transmission system, comprising:
the movable platform according to claims 46 or 47; and
the monitoring device according to any one of the claims 48-65.
